# EUROPÄISCHE PATENTANMELDUNG

(11) **EP 4 632 583 A1**
(43) Veröffentlichungstag der Anmeldung: **15.10.2025**
(21) Anmeldenummer: 25158843.0
(22) Anmeldetag: 19.02.2025
(51) Int. Cl.: G06F 11/26

(54) **VERFAHREN, STEUEREINHEIT UND PRÜFANORDNUNG ZUM PRÜFEN WENIGTENS EINES STEUERGERÄTS FÜR EIN FAHRZEUG**

(30) Priorität: 08.04.2024 DE 102024203170
(71) Anmelder: Stellantis Auto SAS, 78300 Poissy (FR)
(72) Erfinder: PRAUSE, Henning, 65428 Rüsselsheim am Main (DE)
(74) Vertreter: ESIP

(57) **Zusammenfassung**

Ein Verfahren zum Prüfen wenigstens eines Steuergeräts für ein Fahrzeug wird bereitgestellt. Das Verfahren (100) umfasst Bereitstellen (110) des wenigstens einen Steuergeräts (2), Bereitstellen (120) einer Prüfanordnung (1) mit einem Bus (3) zum Verbinden mit dem wenigstens einen Steuergerät (2), Durchführen (130) einer Restbus-Simulation (8) zum Simulieren wenigstens eines weiteren an dem Bus (3) angeschlossenen Steuergeräts, Durchführen (140) einer Aufwachroutine zum Versetzen des wenigstens einen Steuergeräts (2) in einen Betriebsmodus, Einspeisen (150) von realen Fahrzeugdaten zum Ersetzen der Simulation des wenigstens einen weiteren an dem Bus (3) angeschlossenen Steuergeräts, und Anhalten (160) der Simulation des wenigstens einen weiteren an dem Bus (3) angeschlossenen Steuergeräts. Ferner werden eine Steuereinheit (4) eine Prüfanordnung (1) zum Prüfen wenigstens eines Steuergeräts für ein Fahrzeug bereitgestellt.

## Beschreibung

Die vorliegende Offenbarung betrifft im Allgemeinen Prüfverfahren. Im Speziellen betrifft die vorliegende Offenbarung ein Verfahren, eine Steuereinheit und eine Prüfanordnung zum Prüfen wenigstens eines Steuergeräts für ein Fahrzeug.

Es sind Prüfverfahren zum Prüfen von Fahrzeugsteuergeräten bekannt. Insbesondere sind Verfahren zum Testen bzw. Validieren von Fahrzeugsteuergeräten in einer sog. Hardware in the Loop (HIL) Umgebung bekannt, wobei reale Steuergeräte in einer virtuellen Umgebung betrieben werden. Um das Steuergerät unter realistischen Bedingungen testen zu können, werden fehlende Steuergeräte eines Fahrzeugnetzwerkes durch die sog. Restbus-Simulation ersetzt, was zu Problemen führen kann. Denn die realen Steuergeräte überwachen den Bus-Verkehr und können in einen Fehlermoduls wechseln, wenn beispielsweise Fehlende Informationen oder Unstimmigkeiten erkannt werden.

Eine Aufgabe der Ausführungsformen der vorliegenden Offenbarung ist es, ein Verfahren bereitzustellen, welches es ermöglicht, reale Steuergeräte in einer virtuellen Umgebung zu prüfen, ohne dass diese in einen Fehlermodus geraten.

Zur Lösung dieser Aufgabe wird nach einem ersten Aspekt ein Verfahren zum Prüfen wenigstens einen Steuergeräts für ein Fahrzeug vorgeschlagen. Gemäß dem Verfahren wird in einem Verfahrensschritt das wenigstens eine Steuergerät bereitgestellt. In einem weiteren Verfahrensschritt wird eine Prüfanordnung mit einem Bus bzw. Kommunikationsbus zum Verbinden mit dem wenigstens einen Steuergerät bereitgestellt. Das Bereitstellen der Prüfanordnung kann insbesondere Bereitstellen einer HIL- (Hardware in the Loop) Umgebung zum Prüfen des wenigstens einen Steuergeräts umfassen.

Das Verfahren umfasst ferner Durchführen einer Restbus-Simulation zum Simulieren wenigstens eines weiteren an dem Bus angeschlossenen Steuergeräts. Insbesondere können mittels der Restbus-Simulation von dem wenigstens einen weiteren Steuergerät erzeugte Signale simuliert werden, um dem wenigstens einen zu prüfenden Steuergerät eine reale Umgebung vorzutäuschen.

Gemäß dem Verfahren wird eine Aufwachroutine zum Versetzen des wenigstens einen Steuergeräts in einen Betriebsmodus, insbesondere in einen aktiven Betriebsmodus, durchgeführt.

Das Verfahren umfasst ferner Einspeisen von realen Fahrzeugdaten zum Ersetzen der Simulation des wenigstens einen weiteren an dem Bus angeschlossenen Steuergeräts und Anhalten der Simulation des wenigstens einen weiteren an dem Bus angeschlossenen Steuergeräts. Die realen Fahrzeugdaten können insbesondere bei einem realen Betrieb des Fahrzeugs in ein Fahrzeugnetzwerk eingespeiste Daten umfassen.

Das Prüfen des wenigstens einen Steuergeräts erfolgt somit im Wesentlichen zweistufig. Zunächst wird das wenigstens eine zu prüfende Steuergerät aufgeweckt und in einer simulierten Umgebung betrieben. Danach werden die realen Fahrzeugdaten eingespeist, und die simulierte Umgebung durch reale Fahrzeugdaten ersetzt. Durch den zweistufigen Ablauf des Prüfverfahrens können insbesondere Fehlermeldungen und der Wechsel des Steuergeräts in den Fehlermodus vermieden werden. Denn nach dem Aufwachen des wenigstens einen Steuergeräts laufen Diagnose-Routinen, in der sich die einzelnen Teilnehmer ihre Anwesenheit quittieren lassen (Handshake-Verfahren) und Informationen übertragen. Bemerken die Steuergeräte zudem im weiteren Betrieb fehlende Nachrichten oder andere Unstimmigkeiten, werden interne Fehler gesetzt, was eine Validierung der Funktionalität verhindert. Durch die zeitliche Trennung des Aufweckens der Steuergeräte und des Einspeisens der realen Fahrzeugdaten können diese Probleme vermieden werden.

Das Einspeisen der realen Fahrzeugdaten kann insbesondere nach Ablauf der Aufwachroutine durchgeführt werden. Insbesondere werden die realen Fahrzeugdaten erst dann eingespeist, wenn die Aufwachroutine vollständig abgeschlossen ist. Die Steuergeräte starten somit zunächst in der gewohnten HIL-Umgebung mitsamt Restbus-Simulation, um die sensible Aufwachroutine der Steuergeräte nicht zu stören. Ist das System hochgefahren und in einem stabilen Zustand, werden skriptgesteuert die Kommunikationsknoten der simulierten Steuergeräte abgeschaltet und im Wesentlichen zeitgleich die Einspeisung der aufgezeichneten Fahrzeugkommunikation eingeleitet. Somit kann die für Fehlermeldungen besonders anfällige Aufwachphase mit der Restbus-Simulation bzw. mit simulierten Daten überwunden werden, bevor die realen Daten eingespeist werden.

Das Durchführen der Aufwachroutine kann Starten des wenigstens einen Steuergeräts mittels einer Wake-Up-Leitung umfassen. Insbesondere kann das wenigstens eine Steuergerät über die Wake-Up-Leitung mit minimaler Störung der HIL-Umgebung gestartet bzw. aufgeweckt werden.

Das wenigstens eine Steuergerät kann ein Master-Steuergerät und wenigstens ein Slave-Steuergerät umfassen, wobei das Master-Steuergerät eine Aufwach-Spannung an das wenigstens eine Slave-Steuergerät über die Wake-Up-Leitung weitergibt. Damit kann das Aufwachen von mehreren Steuergeräten auf kontrollierte Weise erfolgen.

Die Simulation des wenigstens einen weiteren Steuergeräts kann angehalten werden, sobald die entsprechenden eingespeisten Fahrzeugdaten auf dem Bus vorliegen. Aufgrund des Vorliegens der Fahrzeugdaten kann das wenigstens eine zu prüfende Steuergerät beim Anhalten der Simulation keinen Aussetzer in der Kommunikation bemerken. Entsprechend wird das wenigstens eine Steuergerät in einen Fehlermodus nicht wechseln und das Prüfverfahren kann anhand der realen Fahrzeugdaten fortgesetzt werden.

Das wenigstens eine weitere Steuergerät kann zwei oder mehr weitere Steuergeräte umfassen, wobei die Simulation der weiteren Steuergeräte nacheinander insbesondere skriptgesteuert angehalten werden kann, sobald die entsprechenden eingespeisten Fahrzeugdaten auf dem Bus vorliegen. Insbesondere können die realen Fahrzeugdaten skriptgesteuert nach und nach injiziert werden. Das skriptgesteuerte Anhalten der Simulation der weiteren Steuergeräte, sobald die entsprechenden Fahrzeugdaten vorliegen, ermöglicht somit einen geregelten Wechsel von den simulierten Daten zu den realen Fahrzeugdaten, so dass das wenigstens eine zu prüfende Steuergerät keine Unstimmigkeit in dem Busverkehr erkennen kann. Bis auf die Spannungsversorgung, welche weiterhin durch den HIL bereitgestellt wird, reagieren die realen Steuergeräte nur noch auf die eingespeisten Daten.

Nach einem zweiten Aspekt wird eine Steuereinheit einer Prüfanordnung zum Prüfen wenigstens eines Steuergeräts für ein Fahrzeug bereitgestellt. Die Steuereinheit umfasst einen Prozessor, eine Speichereinheit zum Speichern von Daten und maschinenlesbaren Anweisungen für den Prozessor und eine Schnittstelle. Die Schnittstelle ist zum Verbinden der Steuereinheit mit dem wenigstens einen Steuergerät und mit einem mit dem wenigstens einen Steuergerät verbundenen Bus ausgebildet. Die Speichereinheit enthält Anweisungen für den Prozessor, eine Restbus-Simulation zum Simulieren wenigstens eines weiteren an dem Bus angeschlossenen Steuergeräts durchzuführen, eine Aufwachroutine zum Versetzten des wenigstens einen Steuergeräts in einen Betriebsmodus durchzuführen, und reale Fahrzeugdaten zum Ersetzen der Simulation des wenigstens einen weiteren an dem Bus angeschlossenen Steuergeräts einzuspeisen. Die realen Fahrzeugdaten können insbesondere im realen Betrieb des Fahrzeugs erfasst und in der Speichereinheit gespeichert worden sein. Durch das Ersetzen der Restbus-Simulation durch die realen Fahrzeugdaten können insbesondere Fehlermeldungen und der damit verbundene Wechsel in den Fehlermodus vermieden werden. Die Schnittstelle kann zum Verbinden mit einem Computer als Benutzerschnittstelle zum Empfangen von Benutzereingaben bzw. zum Kontrollieren des Prüfvorgangs ausgebildet sein.

Nach einem dritten Aspekt wird eine Prüfanordnung zum Prüfen wenigstens eines Steuergeräts für ein Fahrzeug bereitgestellt. Die Prüfanordnung umfasst einen Bus zum Anschließen an das wenigstens eine Steuergerät, wobei der Bus zum Durchführen einer Restbus-Simulation ausgebildet ist. Die Prüfanordnung umfasst ferner eine Steuereinheit nach dem zweiten Aspekt zum Prüfen des wenigstens einen an dem Bus angeschlossenen Steuergeräts. Die Prüfanordnung kann einen Computer als Benutzerschnittstelle zum Empfangen von Benutzereingaben bzw. zum Kontrollieren des Prüfvorgangs umfassen. Vorteile und Weiterbildungen der Prüfanordnung ergeben sich aus den Vorteilen und Wirkungen sowie Weiterbildungen des oben beschriebenen Verfahrens. Zur Vermeidung von Wiederholungen wird daher in dieser Hinsicht auf die vorangegangene Beschreibung verwiesen. Insbesondere ermöglicht die Prüfanordnung eine reibungslose Prüfung des wenigstens einen Steuergeräts, ohne dass dieses in einen Fehlermodus wechselt.

Die Erfindung wird nun anhand der beigefügten Figuren näher erläutert. Für gleiche oder gleichwirkende Teile werden in den Figuren gleiche Bezugszeichen verwendet.
- Fig. 1: zeigt schematisch eine Prüfanordnung gemäß einem Ausführungsbeispiel,
- Fig. 2: veranschaulicht schematisch das skriptgesteuerte Einspeisen der realen Fahrzeugdaten nach einem Ausführungsbeispiel, und
- Fig. 3: zeigt ein Flussdiagramm eines Verfahrens zum Prüfen wenigstens eines Steuergeräts für ein Fahrzeug gemäß einem Ausführungsbeispiel.

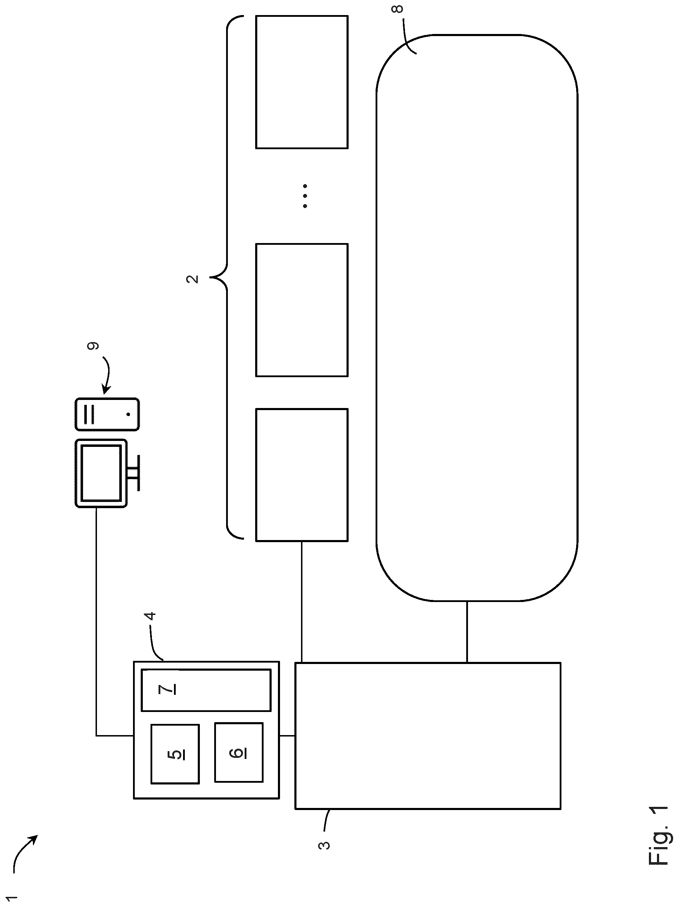

Fig. 1 zeigt schematisch eine Prüfanordnung zum Prüfen wenigstens eines Steuergeräts für ein Fahrzeug gemäß einem Ausführungsbeispiel. Insbesondere zeigt Fig. 1 die Prüfanordnung in einer vereinfachten schematischen Darstellung zusammen mit den zu prüfenden Steuergeräten 2. Die Prüfanordnung umfasst einen Bus 3 zum Anschließen an das wenigstens eine Steuergerät 2 sowie eine Steuereinheit 4 zum Bereitstellen einer HIL-Umgebung zum Betreiben der realen Steuergeräte 2 in einer virtuellen Umgebung. Die realen Steuergeräte 2 können insbesondere funktionale Elemente mit eigener Intelligenz bzw. mit eigenem Controller sein, wie beispielsweise Frontkamera, Bremse, Lenkung etc.

Die Steuereinheit 4 umfasst einen Prozessor 5 und eine Speichereinheit 6 zum Speichern von Daten und maschinenlesbaren Anweisungen für den Prozessor 5. Die Steuereinheit 4 umfasst ferner eine Schnittstelle 7, wobei die Schnittstelle 7 dazu ausgebildet ist, an den Bus 3 bzw. an das wenigstens eine Steuergerät 2 angeschlossen zu werden.

Die Speichereinheit 6 enthält Anweisungen für den Prozessor 5, eine Restbus-Simulation zum Simulieren wenigstens eines weiteren an dem Bus 3 angeschlossenen Steuergeräts durchzuführen. Die Restbus-Simulation 8 wird in Fig. 1 durch ein mit dem Bus 3 verbundenes abgerundetes Rechteck symbolisiert. Mittels der Restbus-Simulation können virtuelle Szenarien erzeugt und getestet werden.

Insbesondere kann die Steuereinheit 4 als Echtzeitrechner ausgebildet sein, um die Restbus-Simulation durchzuführen. Die Steuereinheit 4 und der Bus 3 können insbesondere in einem HIL-Gestell bzw. HIL-Rack verbaut sein. Die Spannungsversorgung der Steuergeräte 2 kann insbesondere über ein Netzteil im HIL bereitgestellt werden. Diese Simulation stellt insbesondere alle notwendigen Signale bereit, die von den realen Steuergeräten erwartet werden, um eine einwandfreie Funktionalität zu gewährleisten. Abhängig vom Platzangebot, sind die realen Steuergeräte ebenfalls in diesem Gestell oder in der unmittelbaren Nähe verbaut und über Kabel mit dem HIL-System verbunden.

Die Speichereinheit 6 enthält ferner Anweisungen für den Prozessor 5, eine Aufwachroutine zum Versetzen des wenigstens einen Steuergeräts 2 in einen Betriebsmodus bzw. zum Aufwecken des wenigstens einen Steuergeräts 2 durchzuführen.

Insbesondere kann die Schnittstelle 7 ausgebildet sein, mit einem Computer 9 bzw.

Benutzerschnittstelle verbunden zu werden, so dass der Benutzer durch seine Eingabe in den Computer 9 bzw. in die Benutzerschnittstelle die Durchführung der Aufwachroutine triggern kann. Insbesondere kann der Computer 9 so konfiguriert sein, dass der Anwender einen simulierten "Engine ON"-Button betätigen kann, wodurch die "Aufwach"-Spannung zum Master Steuergerät freigeschaltet wird.

Die Speichereinheit 6 enthält zudem Anweisungen für den Prozessor, reale Fahrzeugdaten zum Ersetzten der Simulation des wenigstens einen weiteren an dem Bus angeschlossenen Steuergeräts einzuspeisen und die Simulation des wenigstens einen weiteren an dem Bus angeschlossenen Steuergeräts anzuhalten. Insbesondere kann die Speichereinheit 6 die zuvor aufgezeichneten realen Fahrzeugdaten umfassen, so dass diese zum Ersetzen der Simulation aus der Speichereinheit 6 abgerufen werden können. Anhand der Einspeisung realer Fahrzeugdaten können zuvor aufgezeichnete Situationen in einem virtuellen Umfeld wiederholt werden (Replay).

Die Steuergeräte 2 können ein Master-Steuergerät umfasst, welche mit den restlichen Steuergeräten bzw. Slave-Steuergeräten über eine Wake-Up-Leitung (nicht gezeigt) verbunden ist. Das Steuern des Aufwachverhaltens durch den "Master" kann das Aufwachverhalten zentral gesteuert werden, um die in der HIL-Umgebung verbauten, in der Regel sehr sensible, Steuergeräte reibungslos hochzufahren.

Die Speichereinheit 6 kann ferner ein Skript zum Ersetzen der Restbus-Simulation durch die realen Fahrzeugdaten enthalten, so dass die Simulation der weiteren Steuergeräte nacheinander skriptgesteuert angehalten werden, sobald die entsprechenden Fahrzeugdaten auf dem Bus 3 vorliegen.

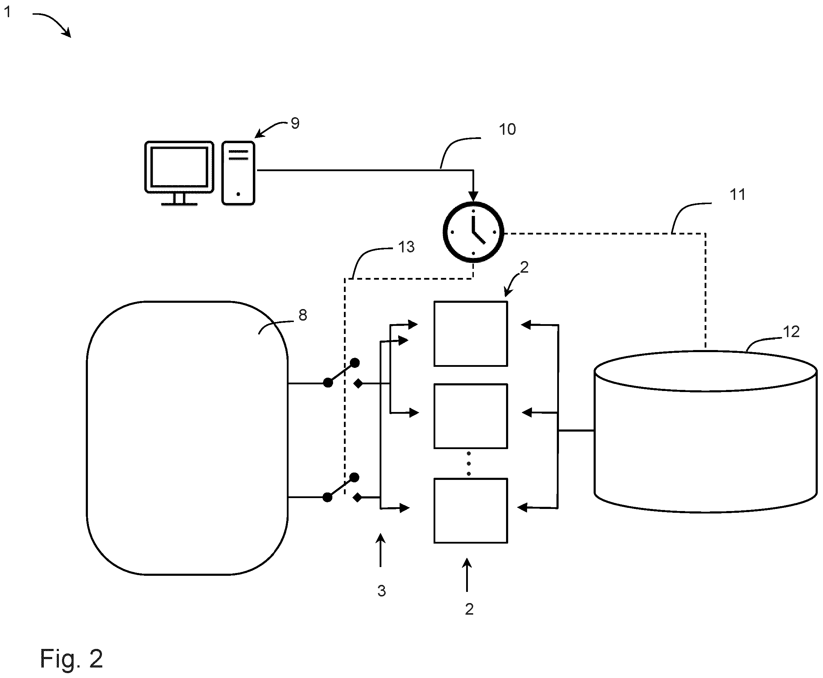

Fig. 2 veranschaulicht schematisch das skriptgesteuerte Einspeisen der realen Fahrzeugdaten. Das Einspeisen der Daten bzw. Replay kann durch den Benutzer über den Computer 9 gestartet werden. Das Starten der Fahrzeugdateneinspielung wird in Fig. 2 durch den Pfeil 10 symbolisiert. Daraufhin erfolgt das Anlegen 11 der realen Fahrzeugdaten 12 an den Bus 3, in Fig. 2 nicht gezeigt. Sodann kann das Anhalten 13 der Simulation bzw. Abschalten der Kommunikation zwischen dem Bus 3 und der Restbus-Simulation 8 erfolgen, insbesondere wenn die Steuergeräte 2 bereits hochgefahren und befinden sich im stabilen Zustand sind. Das zeitliche Abstimmen zwischen dem Anlagen 11 der realen Fahrzeugdaten und dem Anhalten 13 der Simulation wird in Fig. 2 durch eine Uhr symbolisiert.

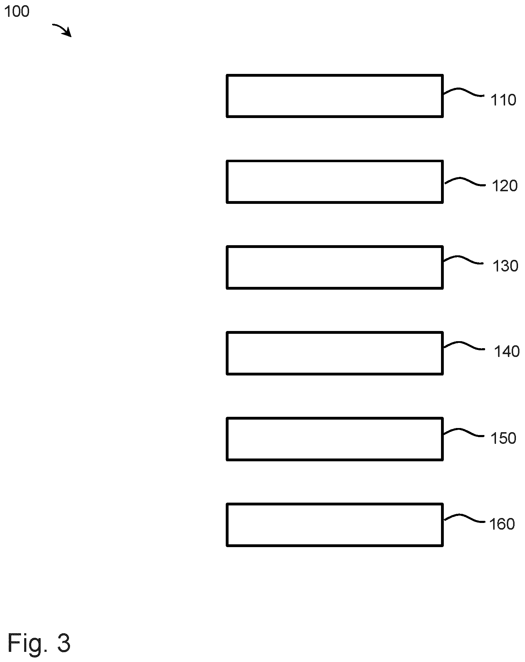

Fig. 3 zeigt ein Flussdiagramm eines Verfahrens zum Prüfen wenigstens eines Steuergeräts für ein Fahrzeug gemäß einem Ausführungsbeispiel. Gemäß dem Verfahren 100 wird in einem Verfahrensschritt 110 wenigstens ein Steuergerät bereitgestellt. In einem weiteren Verfahrensschritt 120 wird eine Prüfanordnung mit einem Bus zum Verbinden mit dem wenigstens einen Steuergerät bereitgestellt. Die Prüfanordnung kann insbesondere gemäß dem Ausführungsbeispiel der Fig. 1 ausgebildet sein.

Das Verfahren 100 umfasst ferner Durchführen 130 einer Restbus-Simulation zum Simulieren wenigstens eines weiteren, an dem Bus angeschlossenen Steuergeräts sowie Durchführen 140 einer Aufwachroutine zum Versetzen des wenigstens eines Steuergeräts in einen Betriebsmodus. Das Durchführen 140 der Aufwachroutine kann Durchführen eines Diagnose-Verfahrens, insbesondere Handshake-Verfahrens, umfassen. Dabei können sich alle Teilnehmer ihre Anwesenheit und den korrekten Verbindungsaufbau quittieren.

Das Verfahren 100 umfasst ferner Einspeisen 150 von realen Fahrzeugdaten zum Ersetzen der Simulation des wenigstens einen weiteren an dem Bus angeschlossenen Steuergeräts, und Anhalten 160 der Simulation des wenigstens einen weiteren an dem Bus angeschlossenen Steuergeräts. Insbesondere kann das Einspeisen 150 der realen Fahrzeugdaten erfolgen, nachdem das gesamte System in der gewohnten HIL-Umgebung hochgefahren wurde und sich in einem fehlerfreien Zustand befindet. Dazu wird skriptgesteuert das Abspielen der realen Fahrzeugdaten gestartet und im Wesentlichen gleichzeitig die Simulation angehalten bzw. die Kommunikation der Restbus-Simulation unterbrochen.

Das Verfahren 100 bietet eine zuverlässige Methode, um die real verbauten Steuergeräte aufzuwecken und um einen reibungslosen Wechsel von synthetischen HIL auf reale Fahrzeugdaten durchzuführen. Durch diesen Ansatz wird gewährleistet, dass die Steuergeräte die vorgenommene Manipulation nicht erkennen und folglich auch nicht in einen Fehlermodus wechseln.

In einigen Ausführungsbeispielen erfolgt das Einspeisen 150 der realen Fahrzeugdaten nach dem die Aufwachroutine abgeschlossen ist, so dass die sensible Aufwachroutine nicht gestört wird. In einigen Ausführungsbeispielen umfasst das wenigstens eine weitere Steuergerät zwei oder mehr weitere Steuergeräte, wobei die Simulation der weiteren Steuergeräte nacheinander, insbesondere skriptgesteuert, angehalten werden, sobald die entsprechenden eingespeisten Fahrzeugdaten auf dem Bus vorliegen. Das skriptgesteuerte Anhalten der Simulation der Steuergeräte ermöglicht einen geregelten Wechsel von den simulierten Daten zu den realen Fahrzeugdaten, so dass die zu prüfenden Steuergeräte keine Unstimmigkeit in dem Busverkehr erkennen können.

Aufgrund des im Wesentlichen gleichzeitigen Ablaufs des Einspeisens der realen Fahrzeugdaten und des Anhaltens der Simulation, bemerken die Steuergeräte den Kommunikationswechsel kaum bis gar nicht und gehen daraufhin nicht in einen Fehlermodus. Somit bleibt die Funktionalität der Steuergeräte erhalten und von diesem Moment an reagieren sie nur noch auf die Nachrichten der aufgezeichneten Daten. Die Funktion er HIL-Umgebung wird von diesem Zeitpunkt an nur auf die Spannungsversorgung reduziert.

Durch dieses Verfahren kann nun die Software der realen Steuergeräte immer wieder angepasst und verbessert werden und ihre Wirksamkeit durch die "Resimulation" unter "realen Bedingungen" bestätigt werden.

Das oben beschriebene Verfahren mit dem Wechsel von synthetischen bzw. simulierten Daten hin zur Einspeisung realer Fahrzeugkommunikation innerhalb einer HIL-Umgebung ist äußerst robust und flexible. Ein weiterer Vorteil ist, dass das Standard-Modell des jeweiligen HILs genutzt werden kann, da lediglich die Kommunikation der Restbus-Simulation eingeschränkt wird. Somit müssen keine weiteren Ressourcen für die Wartung des Models bereitgestellt werden. Dieser Ansatz ist zudem nicht auf zeitintensive und teure Fahrzeugtests mit Prototypen angewiesen und kann gleichzeitig unter möglichst realen Bedingungen durchgeführt werden.

Die Wiedereinspielung bzw. Resimulation von aufgezeichneten Daten ermöglicht, die Vorteile der virtuellen und realen Welt zu kombinieren. insbesondere können Tests in einer HIL-Umgebung beliebig oft und unter identischen Bedingungen wiederholt werden. Zudem können die Tests automatisiert zu Randzeiten und ohne den Einsatz von Mitarbeitern, Fahrzeugen und Equipment durchgeführt werden. Mittels der realen Fahrzeugdaten können nun anstatt von virtuellen Szenarien reale Szenarien abgetestet werden. Diese entsprechen wirklichen Situationen im Straßenverkehr und werden daher schon teilweise bei Fahrzeugabnahmen bzw. Homologationsverfahren von den Prüfstellen akzeptiert.

In der Vergangenheit wurde der Ansatz verfolgt eine HIL-Umgebung ohne bzw. nur mit einer stark reduzierten Restbus-Simulation aufzubauen. So wurden die Steuergeräte wie im zuvor beschriebenen Ansatz geweckt. Anschließend fehlte jedoch aufgrund der fehlenden Restbus-Simulation jegliche Kommunikation. Zwar wurde versucht die Einspeisung der Daten schnellstmöglich bzw. synchron zu starten, jedoch bemerkten die Steuergeräte die kurzzeitig fehlende Kommunikation und wechselten daraufhin in einen Fehlermodus. Um die Fehlermodi der einzelnen Steuergeräte wieder zu verlassen, müssen entsprechend der Cyber-Security-Maßnahmen spezielle Zustände angenommen werden, was bereits bei der Aufzeichnung der Daten bedacht werden musste. Alternativ kann man auch versuchen, das Aufwachen der Steuergeräte und das nachgeschaltete DiagnoseVerfahren mit aufzuzeichnen und entsprechend zu Beginn der Resimulation mit abzuspielen. Das Problem an diesem Ansatz ist, dass das Zuschalten der Spannungsversorgung, welche im Labor durch ein Netzteil und nicht wie im Auto durch die Fahrzeugbatterie erfolgt, mit der abgespielten Kommunikation synchronisiert werden muss. Bei einem Zeitfenster von wenigen Millisekunden ist dies fast unmöglich, sodass die realen Steuergeräte ihre Startroutine nicht erfolgreich durchlaufen können und daraufhin ihre Kommunikation einstellen.

Obwohl zumindest eine beispielhafte Ausführungsform in der vorhergehenden Beschreibung gezeigt wurde, können verschiedene Änderungen und Modifikationen vorgenommen werden. Die genannten Ausführungsformen sind lediglich Beispiele und nicht dazu vorgesehen, den Gültigkeitsbereich, die Anwendbarkeit oder die Konfiguration der vorliegenden Offenbarung in irgendeiner Weise zu beschränken. Vielmehr stellt die vorhergehende Beschreibung dem Fachmann einen Plan zur Umsetzung zumindest einer beispielhaften Ausführungsform zur Verfügung, wobei zahlreiche Änderungen in der Funktion und der Anordnung von in einer beispielhaften Ausführungsform beschriebenen Elementen gemacht werden können, ohne den Schutzbereich der angefügten Ansprüche und ihrer rechtlichen Äquivalente zu verlassen. Außerdem können nach den hier beschriebenen Prinzipien auch mehrere Module bzw. mehrere Produkte miteinander verbunden werden, um weitere Funktionen zu erhalten.

### Bezugszeichenliste

- 1: Prüfanordnung
- 2: Steuergerät
- 3: Bus
- 4: Steuereinheit
- 5: Prozessor
- 6: Speichereinheit
- 7: Schnittstelle
- 8: Restbus-Simulation
- 9: Computer

- 10: Starten der Fahrzeugdateneinspielung
- 11: Anlegen der realen Fahrzeugdaten
- 12: reale Fahrzeugdaten
- 13: Anhalten der Simulation

- 100: Verfahren
- 110: Verfahrensschritt
- 120: Verfahrensschritt
- 130: Verfahrensschritt
- 140: Verfahrensschritt
- 150: Verfahrensschritt
- 160: Verfahrensschritt

## Patentansprüche

1. Verfahren zum Prüfen wenigstens eines Steuergeräts für ein Fahrzeug, umfassend:
- Bereitstellen (110) des wenigstens einen Steuergeräts (2),
- Bereitstellen (120) einer Prüfanordnung (1) mit einem Bus (3) zum Verbinden mit dem wenigstens einen Steuergerät (2),
- Durchführen (130) einer Restbus-Simulation (8) zum Simulieren wenigstens eines weiteren an dem Bus (3) angeschlossenen Steuergeräts,
- Durchführen (140) einer Aufwachroutine zum Versetzen des wenigstens einen Steuergeräts (2) in einen Betriebsmodus,
- Einspeisen (150) von realen Fahrzeugdaten zum Ersetzen der Simulation des wenigstens einen weiteren an dem Bus (3) angeschlossenen Steuergeräts, und
- Anhalten (160) der Simulation des wenigstens einen weiteren an dem Bus (3) angeschlossenen Steuergeräts.

2. Verfahren nach Anspruch 1, wobei das Einspeisen (150) der realen Fahrzeugdaten nach Ablauf der Aufwachroutine durchgeführt wird.

3. Verfahren nach Anspruch 1 oder 2, wobei das Durchführen (140) der Aufwachroutine Starten des wenigstens einen Steuergeräts (2) mittels einer Wake-Up-Leitung umfasst.

4. Verfahren nach einem der vorhergehenden Ansprüche, wobei das wenigstens eine Steuergerät (2) ein Master-Steuergerät und wenigstens ein Slave-Steuergerät umfasst, und das Master-Steuergerät eine Aufwach-Spannung an das wenigstens eine Slave-Steuergerät über die Wake-Up-Leitung weitergibt.

5. Verfahren nach einem der vorhergehenden Ansprüche, wobei die Simulation des wenigstens einen weiteren Steuergeräts angehalten wird, sobald die entsprechenden eingespeisten Fahrzeugdaten auf dem Bus (3) vorliegen.

6. Verfahren nach einem der vorhergehenden Ansprüche, wobei das wenigstens eine weitere Steuergerät (2) zwei oder mehr weitere Steuergeräte umfasst, und wobei die Simulation der weiteren Steuergeräte nacheinander angehalten werden, sobald die entsprechenden eingespeisten Fahrzeugdaten auf dem Bus (3) vorliegen.

7. Steuereinheit einer Prüfanordnung zum Prüfen wenigstens eines Steuergeräts für ein Fahrzeug, umfassend:
- einen Prozessor (5),
- eine Speichereinheit (6) zum Speichern von Daten und maschinenlesbaren Anweisungen für den Prozessor (5), und
- eine Schnittstelle (7) zum Verbinden der Steuereinheit (4) mit dem wenigstens einen Steuergerät (2) und mit einem mit dem wenigstens einem Steuergerät verbundenen Bus (3), wobei die Speichereinheit (6) Anweisungen für den Prozessor (5) enthält:
- eine Restbus-Simulation (8) zum Simulieren wenigstens eines weiteren an dem Bus angeschlossenen Steuergeräts durchzuführen,
- eine Aufwachroutine zum Versetzten des wenigstens einen Steuergeräts (2) in einen Betriebsmodus durchzuführen,
- reale Fahrzeugdaten (12) zum Ersetzen der Simulation des wenigstens einen weiteren an dem Bus (3) angeschlossenen Steuergeräts einzuspeisen, und
- die Simulation des wenigstens einen weiteren an dem Bus (3) angeschlossenen Steuergeräts anzuhalten.

8. Steuereinheit nach Anspruch 7, wobei die Schnittelle (7) ausgebildet ist, mit einem Computer als Benutzerschnittstelle zum Empfangen von Benutzereingaben verbunden zu werden.

9. Prüfanordnung zum Prüfen wenigstens eines Steuergeräts für ein Fahrzeug, umfassend:
- einen Bus zum Anschließen an das wenigstens eine Steuergerät, wobei der Bus (3) zum Durchführen einer Restbus-Simulation (8) ausgebildet ist, und
- eine Steuereinheit nach Anspruch 7 oder 8 zum Prüfen des wenigstens einen an dem Bus (3) angeschlossenen Steuergeräts (2).

10. Prüfanordnung nach Anspruch 9, wobei die Prüfanordnung (1) einen Computer als Benutzerschnittstelle (9) zum Empfangen von Benutzeranweisungen bzw. Kontrollieren des Prüfvorgangs umfasst.
